# EUROPÄISCHE PATENTSCHRIFT

(11) **EP 1 809 518 B1**
(45) Veröffentlichungstag und Bekanntmachung des Hinweises auf die Patenterteilung: **08.10.2008**
(21) Anmeldenummer: 05816561.4
(22) Anmeldetag: 31.10.2005
(51) Int. Cl.: B60R 21/20

(54) **AIRBAGVORRICHTUNG MIT EINEM ZERSTÖRBAREN VERBINDUNGSABSCHNITT ZWISCHEN EINEM GASGENERATOR UND EINER NICHTMETALLISCHEN GASLANZE**
AIRBAG DEVICE COMPRISING A DESTRUCTIBLE JOINING SECTION BETWEEN A GAS GENERATOR AND A NON-METALLIC GAS LANCE
SYSTEME D'AIRBAG COMPORTANT UNE PARTIE DE LIAISON, POUVANT ETRE DETRUITE, SITUEE ENTRE UN GENERATEUR DE GAZ ET UNE LANCE A GAZ NON METALLIQUE

(30) Priorität: 01.11.2004 DE 202004016975 U
(43) Veröffentlichungstag der Anmeldung: 25.07.2007
(73) Patentinhaber: AUTOLIV DEVELOPMENT AB, 447 38 Vargarda (SE)
(72) Erfinder: MALMENSTAM, Jonas, S-441 42 Alingsas (SE); JACONELLI, Hakan, S-441 39 Alingsas (SE); HENINGER, Rolf, 81369 München (DE)
(74) Vertreter: Schön, Thilo
(86) Internationale Anmeldenummer: PCT/EP2005/011641
(87) Internationale Veröffentlichungsnummer: WO 2006/048223

(56) Entgegenhaltungen:
- DE-A1- 10 255 067
- GB-A- 2 314 300
- US-B1- 6 450 529

## Beschreibung

Die Erfindung betrifft eine Airbagvorrichtung mit einem Gasgenerator und einer nichtmetallischen Gaslanze gemäß dem Oberbegriff des Anspruchs 1.

Es ist bekannt, dass eine Airbagvorrichtung über einen Gasgenerator mit einer Ausströmöffnung verfügt, durch die im Aktivierungsfall durch Abbrand eines Treibmittels heißes Gas austritt, welches über geeignete Gaszuführvorrichtungen einem Gassack zur Entfaltung desselben zuleitbar ist. Sofern es sich bei der Airbagvorrichtung um einen sogenannten "Vorhang-Airbag" handelt, bei dem sich der Gassack im Bereich eines Fahrzeugfensters entfaltet, wird das vom Gasgenerator im Rückhaltefall erzeugte Gas üblicherweise durch eine vergleichsweise lange Gaslanze zu dem Gassack geleitet. Diese Gaslanze kann aus Metall bestehen, jedoch kommen auch solche aus Kunststoff oder einem Textilgewebe zum Einsatz.

Zur Verbindung eines Gasgenerators mit einer als starres Rohr ausgebildeten Gaslanze ist es aus der DE 102 55 067 A1 bekannt, einen Verbindungsabschnitt dieser Gaslanze durch Umstülpen deren einen Endes doppelwandig auszubilden. Durch diese bauliche Maßnahme ist der Verbindungsabschnitt der Gaslanze zum Gasgenerator mechanisch besonders stabil ausgebildet.

Zudem ist es aus der GB 23 14 300 A bekannt, eine textile schlauchförmige Gaszuführvorrichtung für einen im Bereich eines Fahrzeugfensters angeordneten Gassack durch Umstülpen ihres freien Endes und Einziehen in diese Gaszuführvorrichtung doppelwandig auszubilden. Dadurch ist diese textile Gaslanze ebenfalls in demjenigen Bereich mechanisch verstärkt ausgebildet, der zur Befestigung an dem Abströmstutzen des Gasgenerators vorgesehen ist.

Weiterhin ist aus der US 6 450 529 B1, die als nächstliegender Stand der Technik betrachtet wird, eine Airbagvorrichtung mit einem Gasgenerator bekannt, an dessen einem Ende ein Diffusor mit axialen Abströmöffnungen angeordnet ist, und an dem ein Verbindungsabschnitt ausgebildet ist, an welchem eine nichtmetallische Gaslanze unter koaxialer Aufnahme des Diffusors stromaufwärts vor demselben befestigt ist, wobei die nichtmetallische Gaslanze an ihrem dem Verbindungsabschnitt zugeordneten axialen Ende über ein Verstärkungsmittel verfügt.

In Kenntnis dieses Standes der Technik existiert das technische Problem, dass ein Gasgenerator sowie eine daran befestigte Gaszuführvorrichtung sich bei einem unbeabsichtigten Auslösen des Gasgenerators aufgrund einer starken äußeren thermischen Einwirkung, beispielsweise bei der Herstellung, der Lagerung in einem Lagerraum oder bei einem Transport derselben von diesem Lagerraum zu dem Integrationsort an einem Kraftfahrzeug, schubneutral verhalten soll.

Mit dem Begriff Schubneutralität ist gemeint, dass der Gasgenerator mit einer daran montierten Gaslanze bei einer starken thermischen Einwirkung von außen auf dieselben, wie beispielsweise bei der Einwirkung durch ein Feuer, bei einer ungewollten Selbstzündung des Gasgenerators auf keinen Fall mit einem axialen Abströmen des von Gasgenerator erzeugten Gases reagieren soll.

Der Erfindung liegt daher die Aufgabe zugrunde, eine Gaszuführvorrichtung für eine Airbagvorrichtung vorzustellen, welche bei einer thermischen Einwirkung von außen auf den Gasgenerator sowie auf den Verbindungsbereich desselben mit einer Gaslanze bei einer ungewollten Selbstzündung desselben ein schubneutrales Verhalten aufweist.

Die Lösung dieser Aufgabe ergibt sich aus den Merkmalen des Hauptanspruchs, während vorteilhafte Weiterbildungen und Ausgestaltungen der Erfindung den Unteransprüchen entnehmbar sind.

Der Erfindung liegt die Erkenntnis zugrunde, dass die Schubneutralität eines Gasgenerators mit einem Diffusor an seinem ausströmseitigen Ende und einer am Gasgenerator befestigten nichtmetallischen Gaslanze bei einer star ken thermischen Einwirkung von außen auf dieselben sowie einer damit einhergehenden Selbstzündung des Gasgenerators dadurch erreicht werden kann, wenn der Gasgenerator im Bereich seines Diffusors von einem Verstärkungsmittel überdeckt ist, welches im Normalbetrieb der thermischen Einwirkung des Gases des Gasgenerators standhält, jedoch bei einer zusätzlichen thermischen Einwirkung von außen zerstört wird.

Demnach geht die Erfindung aus von einer Airbagvorrichtung mit einem Gasgenerator, an dessen einem Ende ein Diffusor mit radialen Abströmöffnungen angeordnet ist, und an dem ein Verbindungsabschnitt ausgebildet ist, an welchem eine nichtmetallische Gaslanze unter koaxialer Aufnahme des Diffusors stromaufwärts vor demselben befestigt ist. Bei dem Diffusor kann es sich um ein separates Bauteil handeln, welches an einem Endbereich des Gasgenerators befestigt ist, oder um einen in dem Gasgenerator integrierten Diffusor.

Zur Lösung der gestellten Aufgabe ist zusätzlich vorgesehen, dass die nichtmetallische Gaslanze an ihrem dem Verbindungsabschnitt zugeordneten axialen Ende über ein Verstärkungsmittel verfügt oder auf ein solches aufgesteckt ist, welches einerseits im Normalbetrieb des Gasgenerators den Gasstrom des Diffusors von dessen radialen Abströmrichtung in eine axiale Abströmrichtung umlenkt sowie eine thermisch wirksame Verstärkung der Gaslanze in diesem Verbindungsabschnitt bewirkt, und andererseits im Falle einer starken thermischen Einwirkung von außen auf diesen Verbindungsabschnitt sowie einer damit einhergehenden ungewollten Selbstzündung des Gasgenerators zu einer Zerstörung des Gaslanzenmaterials samt Verstärkungsmittel führt, in dessen Folge die Umlenkung des Gasstromes von der radialen in die axiale Richtung aufgehoben wird.

Im Ergebnis wird durch den vorgeschlagenen Aufbau der Airbagvorrichtung die gewünschte Schubneutralität des Gasgenerators dadurch erzeugt, dass dessen Gasstrom nicht mehr wie im Normalbetriebszustand in eine axiale Richtung umgelenkt wird, sondern radial von dem Diffusor abströmen kann. Dadurch verhält sich der Gasgenerator bei einer ungewollten Selbstzündung nicht wie eine ungesteuerte Rakete, von dem Gefahren ausgehen können, sondern rotiert im wesentlichen an Ort und Stelle um eine diesbezügliche Rotationsachse.

Gemäß einer ersten Variante der Erfindung kann vorgesehen sein, dass das Verstärkungsmittel als eine zwischen dem Diffusor und der Gaslanze angeordnete Hülse aus Textil, Kunststoff oder dünnem Metallblech ausgebildet ist, während eine zweite Variante vorsieht, dass das Verstärkungsmittel als eine axiale Einstülpung von Gaslanzenmaterial in die Gaslanze ausgebildet ist.

Hinsichtlich des Materials des Verstärkungsmittels wird es zweckmäßig erachtet, wenn dieses der thermischen Einwirkung des ausströmenden Gases des Gasgenerators allein standhält, jedoch bei zusätzlicher thermischer Einwirkung durch eine äußere Wärmequelle thermisch und mechanisch versagt, so dass der Gasstrom des Gasgenerators über den Diffusor radial abströmen kann.

Insbesondere sollte das Verstärkungsmittel vorzugsweise aus einem solchen Material bestehen, welches bei einer thermischen Einwirkung durch eine äußere Wärmequelle thermisch und mechanisch versagt, bevor der Gasgenerator durch diese äußere thermische Einwirkung sich ungewollt selbst zündet.

Ein derartiges Material könnte beispielsweise ein Verbundwerkstoff sein, dessen zum Diffusor weisende Seite thermisch gut isoliert aber mechanisch nicht sonderlich stabil ist, während dessen Außenseite zwar mechanisch stabil, jedoch thermisch nicht sehr widerstandsfähig ist. Bei normalen Betriebsbedingungen schützt die radial innere Isolationsschicht den radial äußeren Bereich des Verstärkungsmittels vor thermischer Zerstörung, während dieser Bereich versagt, wenn von außen Hitze auf dieses Verstärkungsmittel einwirkt.

Durch diese Ausgestaltung der Erfindung wird erreicht, dass spätestens unmittelbar nach der Selbstzündung des Gasgenerators das genannte gewünschte Abströmverhalten vorliegt.

Außerdem wird es zur Reduzierung der Herstellkosten der Airbagvorrichtung als vorteilhaft erachtet, wenn das Verstärkungsmittel und das einströmseitig axiale Ende der Gaslanze durch ein gemeinsames Befestigungsmittel auf dem Verbindungsabschnitt des Gasgenerators befestigt sind. In vorteilhafter Weise kann das Verstärkungsmittel innerhalb der Gaslanze befestigt sein (beispielsweise durch Annähen oder durch Kleben).

Schließlich ist bevorzugt vorgesehen, dass die Länge des Verstärkungsmittels derart gewählt ist, dass dieses die radialen Ausströmöffnungen des Diffusors überdeckt und sich nicht wesentlich darüber hinaus erstreckt.

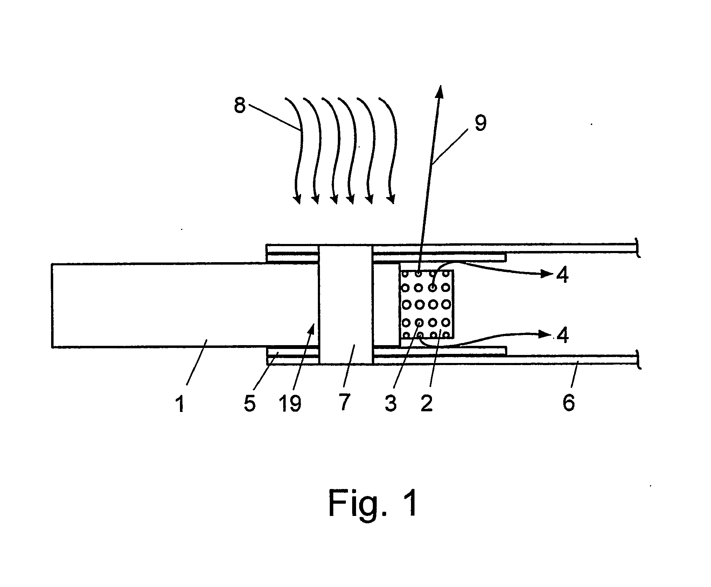

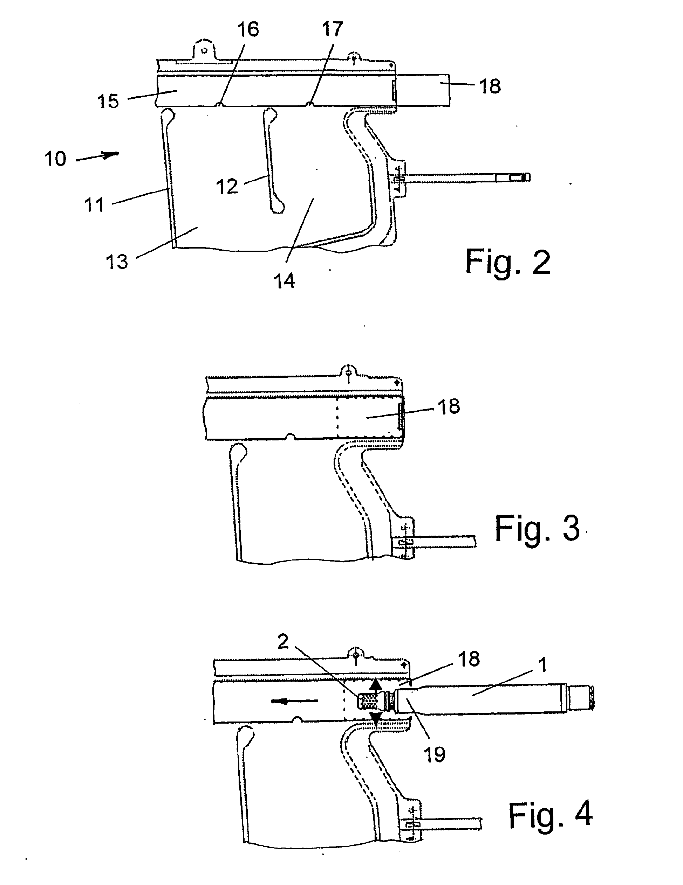

Die Erfindung wird nachfolgend anhand der Zeichnung weiterer erläutert, in der zwei Ausführungsformen dargestellt sind. In dieser Zeichnung zeigt Figur 1 eine schematische Schnittdarstellung einer Airbagvorrichtung im Verbindungsbereich zwischen einem Gasgenerator und einer Gaslanze, sowie die und Figuren 2 bis 4 einen Abschnitt eines Vorhang-Airbags mit flexibler Gaslanze und die Herstellung eines thermisch verstärkenden Verbindungsabschnittes zum Gasgenerator durch Einstülpung.

Wie Fig.1 demnach zu entnehmen ist, verfügt ein im wesentlichen zylindrisch geformter Gasgenerator 1 an seinem ausströmseitigen axialen Ende über einen Diffusor 2, durch dessen Ausströmöffnungen 3 das vom Gasgenerator erzeugte Gas radial abströmen kann. Durch diesen Diffusor 2 wird in bekannter Weise der erzeugte Gasstrom räumlich verteilt, so dass die thermische Belastung einer an dem Gasgenerator 1 stromauf des Diffusors 2 befestigte Gaslanze 6 in beherrschbaren Grenzen gehalten wird.

Die Gaslanze 6 besteht vorliegend aus einem nichtmetallischen, vorzugsweise flexiblen Material, welches ein Textilgewebe sein kann. In einer anderen Ausführungsform besteht die Gaslanze aus einem Kunststoffmaterial.

Zum thermischen Schutz dieser Gaslanze 6 sieht die in Fig. 1 dargestellte erste Variante der Erfindung vor, dass radial zwischen dem Diffusor 2 und der Gaslanze 6 ein Verstärkungsmittel in Form einer thermisch stabileren Hülse 5 angeordnet ist, die gemeinsam mit der Gaslanze 6 durch ein Befestigungsmittel 7, etwa eine Rohrschelle, an einem Verbindungsabschnitt 19 des Gasgenerators 1 befestigt sind.

Wie Fig. 1 verdeutlicht, strömt das von Gasgenerator 1 erzeugte Gas zumindest teilweise radial aus dem Diffusor 2 aus. Dieser Gasstrom trifft dann auf das als Hülse 5 ausgebildete Verstärkungsmittel, wodurch der Gasstrom 4 axial in die Gaslanze 6 umgelenkt wird. Das Material der Hülse 5 und der Gaslanze 6 sind derartig gewählt, dass diese der thermischen und mechanischen Einwirkung während dieses normalen Betriebs des Gasgenerators standhalten.

Sobald jedoch zusätzlich zu dem heißen Gas des Gasgenerators 1 oder in Alleinstellung eine äußere thermische Einwirkung 8 auf diese Bauteile, beispielsweise durch ein Feuer, zu verzeichnen ist, wird dadurch das Material der Gaslanze 6 sowie das der als Hülse 5 ausgebildeten Verstärkungsmittels zerstört. Dadurch wird sichergestellt, dass nach einer Selbstzündung das Gas des Gasgenerators 1 in diesem Ausnahmefall, der beispielsweise durch einen Brand in einem Lagerraum für derartige Airbagvorrichtungen entstehen kann, ohne axiale Umlenkung radial den Diffusor 2 verlassen kann. Durch dieses Bauteilverhalten wird sichergestellt, dass der Gasgenerator bei einem solchen Brand nicht wie eine unkontrollierte Rakete durch die Gegend fliegt, sondern lediglich um seine Rotationsachse rotiert.

Im einfachsten Fall reicht es in Abhängigkeit von der Länge der Hülse 5 bei etwas weniger gutem Verhalten des Gasgenerators 1 aus, wenn im Falle der geschilderten thermischen Einwirkung 8 von außen lediglich das Material der Gaslanze der thermischen Belastung aus der Summe der Wärme des Gasstroms und der Hitze von außen nicht standhält und dadurch zerstört wird.

Die Figuren 2 bis 4 zeigen eine andere Ausführungsform der Erfindung, bei der ein nur ausschnittweise dargestellter sogenannter Vorhang-Gassack 10 aus einem Textilgewebe besteht, welches durch Nähte 11, 12 in einzelne Gassackkammern 13, 14 aufgeteilt ist. Zudem ist in einem oberen Abschnitt des Gassacks 10 eine textile Gaslanze 15 eingeführt oder dort ausgebildet, durch deren Ausströmöffnungen 16 und 17 die beiden Gassackkammem 13 und 14 mit dem vom Gasgenerator 1 erzeugbaren Gas im Rückhaltefall befüllbar sind.

Zur Lösung der der Erfindung zugrunde liegenden Aufgabe ist nun vorgesehen, dass die Gaslanze 15 an ihrem zum Gasgenerator 1 weisenden axialen Ende 18 einen Umstülpabschnitt aufweist, der zur Bildung eines thermisch wirksamen Verstärkungsbereiches in die Gaslanze 15 einstülpbar ist. In diesen Verstärkungsbereich 18 ist dann der Gasgenerator 1 mit seinem Diffusor 2 eingeführt und anschließend mit dem Gassack 10 und der Gaslanze 15 mechanisch verbunden.

Wie insbesondere Fig. 4 zeigt, wird das vom Gasgenerator 1 im Rückhaltefall erzeugte Gas von diesem durch Umstülpung erzeugten Verstärkungsabschnitt 18 von einer radialen Ausströmrichtung in eine axiale Ausströmrichtung umgelenkt.

Im Falle einer thermischen Einwirkung 8 von außen, beispielsweise durch ein Feuer, wird dieser Verstärkungsabschnitt 18 aufgrund seines Aufbaus und/oder seiner Materialeigenschaften ebenso wie bei dem im Zusammenhang mit Fig.1 geschilderten Beispiel zerstört, so dass ein radiales Abströmen des vom Gasgenerator 1 erzeugten und durch den Diffusor 2 umgelenkten Gasstromes möglich ist.

### Bezugszeichenliste

- 1: Gasgenerator
- 2: Diffusor
- 3: Ausströmöffnung
- 4: Gasstrom
- 5: Verstärkungsmittel, Kunststoffhülse
- 6: Gaslanze
- 7: Befestigungsmittel
- 8: Thermische Einwirkung, Wärmequelle
- 9: Radialer Gasstrom
- 10: Gassack
- 11: Naht
- 12: Naht
- 13: Gassackkammer
- 14: Gassackkammer
- 15: Gaslanze
- 16: Gasausströmöffnung in der Gaslanze
- 17: Gasausströmöffnung in der Gaslanze
- 18: Axiales Ende der Gaslanze, Einstülpabschnitt
- 19: Verbindungsabschnitt

## Patentansprüche

1. Airbagvorrichtung mit einem Gasgenerator (1), an dessen einem Ende ein Diffusor (2) mit radialen Abströmöffnungen (3) angeordnet ist, und an dem ein Verbindungsabschnitt (19) ausgebildet ist, an welchem eine nichtmetallische Gaslanze (6, 15) unter koaxialer Aufnahme des Diffusors (2) stromaufwärts vor demselben befestigt ist, wobei die nichtmetallische Gaslanze (6, 15) an ihrem dem Verbindungsabschnitt (19) zugeordneten axialen Ende über ein Verstärkungsmittel (5, 18) verfügt oder auf ein solches aufgesteckt ist, welches einerseits im Normalbetrieb des Gasgenerators (1) den Gasstrom (4) des Diffusors (3) von dessen radialen Abströmrichtung in eine axiale Abströmrichtung umlenkt sowie eine thermisch wirksame Verstärkung der Gaslanze (6, 15) in diesem Verbindungsabschnitt (19) bewirkt, und andererseits im Falle einer starken thermischen Einwirkung (8) von außen auf diesen Verbindungsabschnitt (19) sowie einer damit einhergehenden ungewollten Selbstzündung des Gasgenerators zu einer Zerstörung des Gaslanzenmaterials samt Verstärkungsmittel (5, 18) führt, in dessen Folge die Umlenkung des Gasstromes (4) von der radialen in die axiale Richtung aufgehoben wird.

2. Airbagvorrichtung nach Anspruch 1, **dadurch gekennzeichnet, dass** das Verstärkungsmittel (5) als eine zwischen dem Diffusor (3) und der Gaslanze (6) angeordnete und als Hülse aus Textil, Kunststoff oder dünnem Metallblech ausgebildet ist.

3. Airbagvorrichtung nach Anspruch 3, **dadurch gekennzeichnet, dass** das Verstärkungsmittel (5, 18) aus einem solchen Material besteht, welches bei einer thermischen Einwirkung (8) durch eine äußere Wärmequelle thermisch und mechanisch versagt, schon bevor der Gasgenerator (1) durch diese äußere thermische Einwirkung (8) sich ungewollt selbst zündet.

4. Airbagvorrichtung nach Anspruch 2 oder 3, **dadurch gekennzeichnet, dass** das Verstärkungsmittel (5) als Verbundwerkstoff ausgebildet ist, dessen zum Diffusor (3) weisende Seite thermisch gut isoliert, aber mechanisch nicht sonderlich stabil ist, während dessen Außenseite zwar mechanisch stabil, jedoch thermisch nicht sehr widerstandsfähig ist.

5. Airbagvorrichtung nach Anspruch 1, **dadurch gekennzeichnet, dass** das Verstärkungsmittel (18) als eine Einstülpung von Gaslanzenmaterial in die Gaslanze (15) ausgebildet ist.

6. Airbagvorrichtung nach einem der vorherigen Ansprüche, **dadurch gekennzeichnet, dass** das Verstärkungsmittel (5, 18) und das einströmseitig axiale Ende der Gaslanze (6, 15) durch ein gemeinsames Befestigungsmittel (7) auf dem Verbindungsabschnitt (19) des Gasgenerators (1) befestigt ist.

7. Airbagvorrichtung nach einem der vorherigen Ansprüche, **dadurch gekennzeichnet, dass** das Verstärkungsmittel (5, 18) innerhalb des einströmseitigen Endes der Gaslanze (6, 15) durch Annähen oder Kleben befestigt ist.

8. Airbagvorrichtung nach einem der vorherigen Ansprüche, **dadurch gekennzeichnet, dass** die Länge des Verstärkungsmittels derart gewählt ist, dass dieses die radialen Ausströmöffnungen des Diffusors (3) überdeckt und sich nicht wesentlich darüber hinaus erstreckt.

## Claims

1. Airbag device with a gas generator (1), at whose one end a diffuser (2) with radial outflow openings (3) is located, and on which a connection section (19) is formed, on which a non-metallic gas lance (6,15) is fixed upstream of the diffuser (2) and accommodating the diffuser in co-axial fashion, whereby the non-metallic gas lance (6, 15) at its axial end assigned to the connection section (19) is provided with a reinforcement means (5, 18) or is placed upon such a means, which on the one hand in normal operation of the gas generator (1), diverts the gas stream (4) of the diffuser (3) from its radial flow-off direction into an axial flow-off direction, and also effects a temperature-effective reinforcement of the gas lance (6, 15) in this connection section (19), and on the other hand in the case of a strong temperature influence (8) from the outside on this connection section (19) and a self-ignition of the gas generator (1) coming along with this, leads to destruction of the gas lance material along with the reinforcement means (5,18), as a result of which the diversion of the gas stream (4) from radial to axial direction is cancelled.

2. Airbag device according to claim 1, **characterised in that** the reinforcement means (5) is in the form of a sleeve of textile material, plastic or thin metal sheet located between diffuser (3) and gas lance (6).

3. Airbag device according to claim 3, **characterised in that** the reinforcement means (5, 18) consists of a material which, in case of a temperature influence (8) from an outside heat source fails thermally and mechanically, even before the gas generator (1) unintentionally self-ignites because of this outside temperature influence (8).

4. Airbag device according to claim 2 or 3, **characterised in that** the reinforcement means (5) is formed as composite material, whose side pointing towards the diffuser (3) is thermally well insulating, but not particularly stable in the mechanical sense, while its outer side is mechanically stable, but not particularly temperature resistant.

5. Airbag device according to claim 1, **characterised in that** the reinforcement means (18) is formed as a turn in of gas lance material into the gas lance (15).

6. Airbag device according to one of the previous claims, **characterised in that** the reinforcement means (5, 18), and the axial end of the gas lance (5, 18) on the inflow side are fixed to the connection section (19) of the gas generator (1) with a joint fixing means.

7. Airbag device according to one of the previous claims, **characterised in that** the reinforcement means (5, 18) is fixed inside the inflow side end of the gas lance (6,15) by means of sewing or gluing.

8. Airbag device according to one of the previous claim, **characterised in that** the length of the reinforcement means is selected in such a way that it covers the radial outflow openings of the diffuser (3) and does not extend more than slightly beyond it.

## Revendications

1. Système d'airbag comprenant un générateur de gaz (1), sur une extrémité duquel est disposé un diffuseur (2) avec des ouvertures d'écoulement (3) radiales, et sur lequel est conçue une partie de liaison (19), sur laquelle est fixée une lance de gaz (6, 15) non métallique avec le logement coaxial du diffuseur (2) en amont de celui-ci, la lance à gaz (6, 15) non métallique disposant d'un moyen de renforcement (5, 18) sur son extrémité axiale, tournée vers la partie de liaison (19) ou étant emboîtée sur un tel moyen, lequel moyen d'une part dévie, en mode normal du générateur de gaz (1), le flux de gaz (4) du diffuseur (3) de son sens d'écoulement radial dans un sens d'écoulement axial et entraîne un renforcement thermiquement efficace de la lance à gaz (6, 15) dans cette partie de liaison (19) et d'autre part entraîne dans le cas d'un effet (8) thermique important par l'extérieur sur cette partie de liaison (19) et dans le cas d'une auto-inflammation involontaire concomitante du générateur de gaz (1) une destruction du matériau de la lance à gaz avec le moyen de renfort (5, 18), en conséquence de quoi la déviation du flux de gaz (4) de la direction radiale dans la direction axiale est supprimée.

2. Système d'airbag selon la revendication 1,
**caractérisé en ce que** le moyen de renforcement (5) est conçu comme un élément disposé entre le diffuseur (3) et la lance à gaz (6) et comme une douille en textile, plastique ou tôle de métal mince.

3. Système d'airbag selon la revendication 3,
**caractérisé en ce que** le moyen de renfort (5, 18) est à base d'un tel matériau, qui, lors d'un effet (8) thermique et mécanique occasionné par une source de chaleur extérieure, est défaillant aux plans thermique, avant même que le générateur de gaz (1) s'enflamme involontairement de lui-même du fait de cet effet (8) thermique extérieur.

4. Système d'airbag selon la revendication 2 ou 3, **caractérisé en ce que** le moyen de renfort (5) est conçu comme un matériau composite, dont le côté dirigé vers le diffuseur (3) est bien isolé thermiquement, mais n'est pas particulièrement stable au plan mécanique, alors que son côté extérieur est certes stable mécaniquement, mais n'est pas très résistant au plan thermique.

5. Système d'airbag selon la revendication 1, **caractérisé en ce que** le moyen de renfort (18) est. conçu comme un enfoncement de matériau de lance à gaz dans la lance à gaz (15).

6. Système d'airbag selon l'une quelconque des revendications précédentes, **caractérisé en ce que** le moyen de renfort (5, 18) et l'extrémité axiale côté entrée de la lance à gaz (6, 15) sont fixés par un moyen de fixation (7) commun sur la partie de liaison (19) du générateur de gaz (1).

7. Système d'airbag selon l'une quelconque des revendications précédentes, **caractérisé en ce que** le moyen de renfort (5, 18) est fixé à l'intérieur de l'extrémité côté entrée de la lance à gaz (6, 15) par couture ou collage.

8. Dispositif d'airbag selon l'une quelconque des revendications précédentes, **caractérisé en ce que** la longueur du moyen de renfort est choisie de telle sorte que celui-ci recouvre les ouvertures de sortie radiales du diffuseur (3) et ne s'étend pas principalement au-delà.
